Europäisches Patentamt

European Patent Office

Office européen des brevets

(11) Publication number: **0 648 695 A2**

# EUROPEAN PATENT APPLICATION

(21) Application number: **94116482.4**

(22) Date of filing: **19.10.94**

(51) Int. Cl.6: **B65G 47/30**

(30) Priority: **19.10.93 US 138832**

(43) Date of publication of application:
**19.04.95 Bulletin 95/16**

(84) Designated Contracting States:
**AT BE CH DE DK ES FR GB GR IE IT LI LU NL
PT SE**

(71) Applicant: **MAGNETIC SEPARATION SYSTEMS
INC.**
**3738 Keystone Avenue**
**Nashville, TN 37211 (US)**

(72) Inventor: **Kenny, Garry R., Dr.**
**Route 1, 6299 McDaniel Road**
**College Grove, TN 37046 (US)**
Inventor: **Skeen, Michael A.**
**150 Delvin Drive**
**Antioch, TN 37013 (US)**

(74) Representative: **Fuchs, Franz-Josef, Dr.-Ing. et
al**
**Postfach 22 13 17**
**D-80503 München (DE)**

(54) **System and method for singulating pieces of material having different sizes and shapes.**

(57) For singulating inhomogeneous materials pieces of material (32) are deposited onto a diverter conveyor (10). The conveyor path is interrupted by diverters (16) extending at obtuse angles across the path. The diverters (16) work the pieces of material (32) into a single file order and perform some spac-ing. The diverter conveyor (10) then deposits the pieces (32) onto an acceleration conveyor (44) hav-ing a velocity greater than the velocity of the diverter conveyor (10). The acceleration conveyor (44) trans-ports the pieces (32) to a sensor unit while expand-ing the distance between the pieces (32).

FIG. 9

The present invention relates to a system and a method for singulating pieces of material having different sizes and shapes.

In order to facilitate recycling of used materials like plastic containers or machining scraps, the pieces of material first need to be separated. The same holds true with certain virgin materials such as ores and the like. Such pieces of material are typically inhomogeneous with respect to shape and size. Separation of the different pieces often requires that the pieces are presented one after another to an identification means such as a sensor in order to identify the pieces accurately. Identification of multiple pieces at the same time would be more difficult and, in some cases, currently impossible. Once identified, it is only feasible to separate the different pieces accurately if they are individually available to an injection system.

The object of the invention is to provide a system and method for accurately singulating imhomogeneous pieces of material in order to make it easier to identify and separate these pieces.

In accordance with the invention, this object is accomplished in the system of claim 1 and the method of claim 8.

Advantageous embodiments of the invention are given in the dependent claims.

Preferably the pieces of material are first deposited onto a cleat conveyor which is set at an incline so that the pieces of material not residing on a cleat will fall backwards. The cleat conveyorr deposits the pieces onto a cross conveyor which has a cross conveyor path perpendicular to the cleat conveyor path. There is a slight drop and slide between the cleat conveyor and cross conveyor. The cross conveyor then deposits the pieces onto a diverter system having a diverter conveyor moving the pieces along a path, which is interrupted by diverters extending at obtuse angles across the path. The diverter system works the pieces into a single file order and performs some spacing. The diverter conveyor then deposits the pieces onto an acceleration conveyor having a velocity greater than the diverter conveyor. The acceleration conveyor then transports the pieces to a sensor conveyor while expanding the distance between the pieces. The sensor conveyor then transports the pieces through a sensor for determining and then separating them. The combination of changes in direction and velocity singulates the pieces and spaces the pieces apart for sensing and separation.

The invention is described in detail below with reference to the drawings, in which

Fig 1 is a perspective view of an embodiment of a diverter system according to the present invention.

Figs. 2 - 4 is a top view of the diverter system of the present invention.

Fig. 5 is a top view of the diverter system and an acceleration conveyor.

Fig. 6 is a side view of the diverter system and acceleration conveyor.

Fig. 7 is a top view of a cleat conveyor and a cross conveyor.

Fig. 8 is a side view of the cleat conveyor and cross conveyor.

Fig. 9 is a plan view showing transport of pieces of material from the cleat conveyor to the acceleration conveyor.

Fig. 10 is a side view of the system of Fig. 9.

Fig. 11 is a plan view of the acceleration conveyor and a sensor conveyor.

Fig. 12 is a side view of the acceleration conveyor and sensor conveyor.

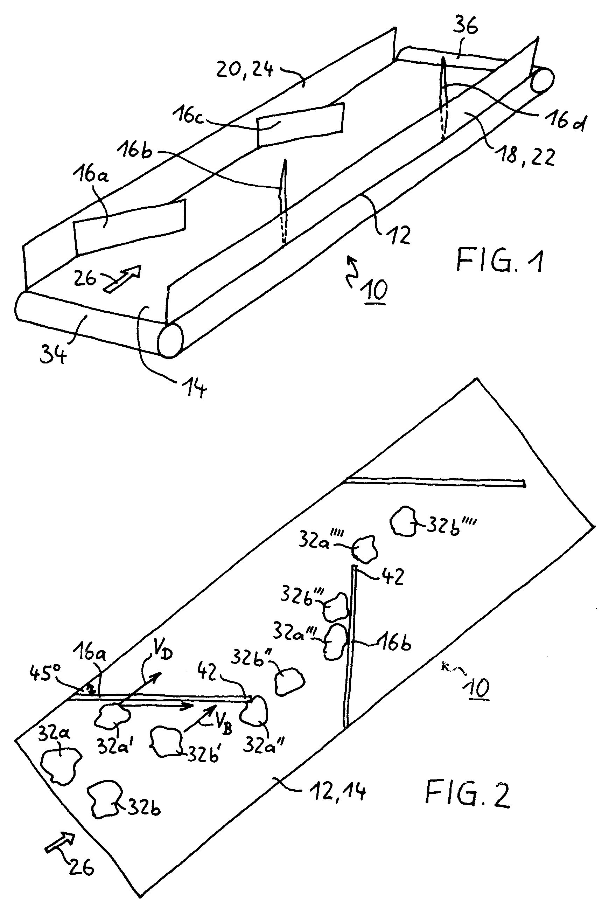

Referring now to Fig. 1, there is shown generally at 10 a diverter system. The diverter system 10 has a conveyor 12 run by a conveyor belt 14 which transports pieces of material (32 in Fig. 2) along a diverter path 26 from a receiving end 34 to a discharge end 36. Path 26 has a right side 18 and a left side 20. Attached to the diverter system 10 proximate the right side 18 is a right wall 22 and attached to the diverter system 10 proximate the left side 20 is a left wall 24. Both walls 22 and 24 are substantially vertical in relation to the conveyor 12. In the direction of path 26 diverters 16 are alternately attached to the right wall 22 and the left wall 24 whereby each diverter 16 intersects the path 26 at an obtuse angle and extends beyond the middle of the path 26 between walls 22 and 24. In the shown embodiment of the invention a first diverter 16a is attached to the left wall 24 and intersects path 26 at an obtuse angle. A subsequent second diverter 16b is attached to the right wall 22 and intersects path 26 at an obtuse angle. A third diverter 16c is attached to the left wall 24 and a fourth diverter 16d is attached to the right wall 22, both diverters 16c and 16d intersecting path 26 at an obtuse angle. Diverters 16 function to force pieces of material (32 in Fig. 2) moving along path 26 into a serpentine motion as they are transported down length of path 26. Pieces of material traveling side by side will tend to be separated parallel to length of conveyor 12 since the speed of pieces which encounter diverter 16 first will decrease parallel to the length of conveyor 12 while the other pieces will maintain their original speed until they encounter a subsequent diverter 16.

Fig. 2 shows the operation of the diverter system 10. In the diverter system 10, pieces of material 32a and 32b are deposited on the conveyor belt 14 to travel along path 26. As pieces 32a and 32b come into contact with the first diverter 16a, the first piece will assume position 32a' while the second piece will assume position 32b'. As can be seen, the first piece 32a' will be slowed by the first diverter 16a whereas the second piece 32b' will travel at the rate of velocity of conveyor belt 12. Pieces 32a and 32b will then assume the position of 32a'' and 32b'' as time passes thereby resulting in a single file alignment until they contact the second diverter 16b and assume positions 32a''' and 32b'''. As time passes further, pieces will then become in single file fashion and partially separated to assume position of 32a'''' and 32b''''. In the preferred embodiment, the diverters 16 are placed at an obtuse angle of 135° with respect to path 26. Therefore, although velocity of conveyor belt 14 is measured at $V_B$, the actual velocity of material caused by deflection caused by diverter 16 is actually $V_D = V_B \cdot \cos 45° \leq V_B$. Thus although the pieces of material 32 tend to bunch up at each successive diverter 16, they will separate as they round diverter ends 42.

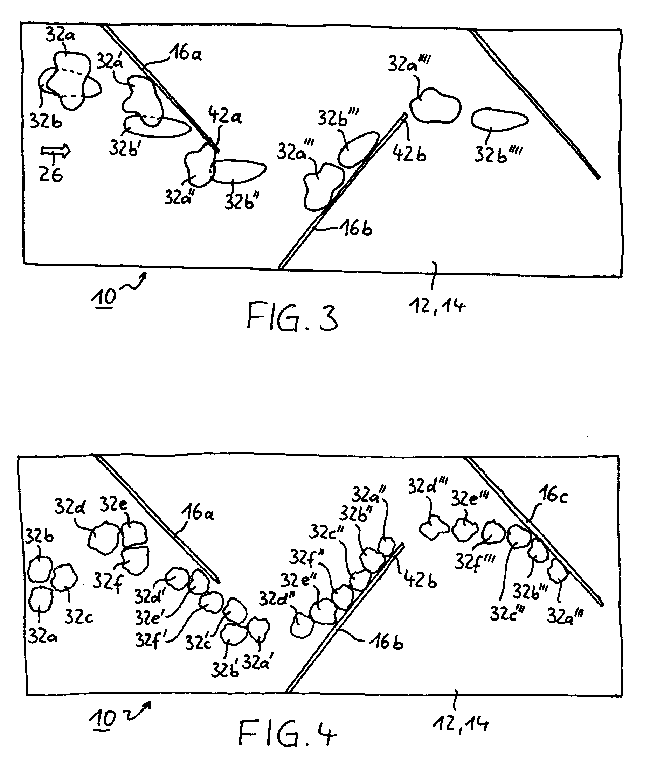

As a cluster of pieces of material 32 collides with diverter 16, the pieces 32 tend to separate tue to their varying size and shape. That is, a larger piece on top of a smaller piece will encounter the diverter 16 sooner and thus be diverted from its original path sooner than the small piece thereby causing a differential motion between the two pieces. This effect is more clearly shown in Fig. 3. Two pieces of material 32a and 32b are deposited onto conveyor belt 14 along path 26 on top of one another. As time passes, piece 32a hits the first deflector 16a first thereby assuming position 32a' while piece 32b assumes position 32b'. As pieces 32 round diverter end 42 a, piece 32b surges ahead to position 32b'' whereas piece 32a is still engaged by first diverter 16a thereby assuming position 32a''. The pieces of material 32 then hit the second diverter 16b and are separated as shown in 32a''' and 32b'''. As the pieces 32 pass beyond diverter end 42b, they are separated to positions 32a'''' and 32b''''.

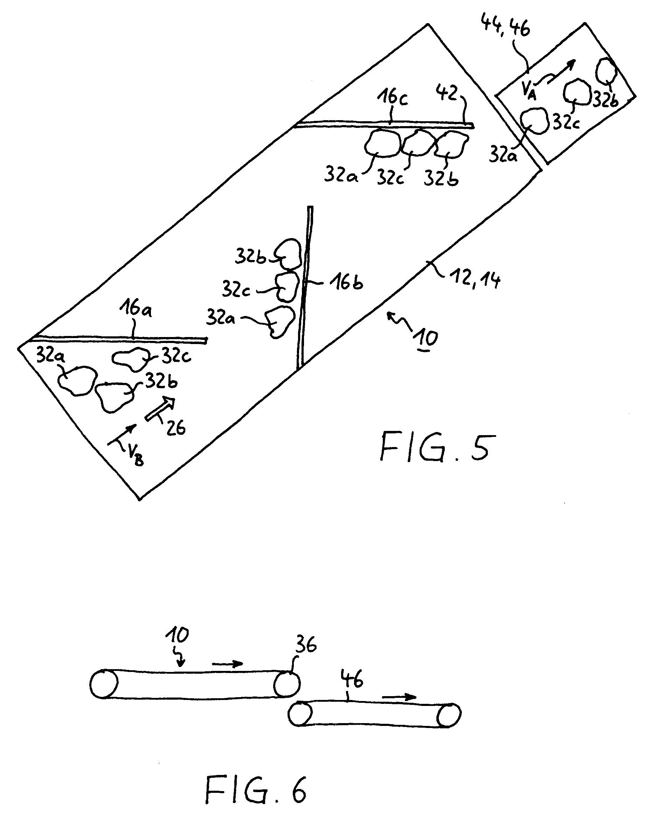

Referring now to Fig. 4, there is shown the diverter system 10 as it operates with more than two pieces of material 32. As can be seen pieces of material 32a, 32b, 32c, 32d, 32e, and 32 f may be clustered at the receiving end 34 and they are placed closer to single file after contact with the first diverter 16a to assume positions 32a', 32b', 32c', 32e', and 32f'. The pieces 32 become more singulated when they come into the contact with the second diverter 16b thereby assuming positions 32a'', 32b'', 32c'', 32d'', 32e'', and 32f''. As pieces 32 hit diverter end 42b, they are not only singulated but they are also separated slightly to assume positions 32a''', 32b''', 32c''', 32d''', 32e''', and 32f''' until they contact the third diverter 16 c.

In the preferred embodiment, when the pieces of material 32 are plastic bottles, conveyor belt 14 must be substantially 45 cm to 100 cm wide to perform the required function without causing the bottles to jam between the diverters 16 and the walls 22 and 24. When plastic bottles are singulated, diverters 16 must intersect path 26 at substantially 135° to 150°. Diverters 16 should extend to a point substantially one-half to two-thirds of the width of the conveyor belt 14. Conveyor belt speed $V_B$ should be between 0,5 m/s and 2 m/s.

In the preferred embodiment, the diverter ends 42 are curved for a short section extending into the conveyor belt 14 to facilitate the transition of the pieces 32 from a motion oblique to path 26 to one parallel path 26. In the preferred embodiment, diverters 16 should be spaced such that the area between subsequent diverter ends 42 should be a least as large as the perpendicular distance between diverter end 42 and side 18 or 20. There should be a minimum of three diverters 16 and as many as six diverters 16. For pieces 32 other than plastic bottles, the width of the conveyor in the preferred embodiment should be at least as large as eight times the average width of largest material 32 with three to six diverters 16 being used.

In the preferred embodiment, the diverers 16 are mounted so that they float with spring return to maintain contact with the conveyor belt 14. This is to prevent jamming due to sharp edges of pieces of material 32 or due to other materials that may be present such as thin levels of grit from being wedged under diverters 16. Additional means may be employed on the conveyor belt 14 such as small cleats attached to the conveyor belt 14 in various places.

Closing large gaps between the pieces of material 32 or clusters of them is as important as the final goal of producing relatively small and uniform gaps between the pieces 32. The capacity of the singulating system, that is the number of pieces of material 32 per second moving through the system, depends upon the number of pieces 32 which can be sensed and separated at any given time. Obviously, uniformity and presentation to the sensor and singulator increases this.

The length of gap between pieces 32 is increased by the addition of an acceleration conveyor 44. This feature is shown by referring to Fig. 5 which shows the diverter system 10 and an acceleration conveyor system 44. The pieces 32 contact the first diverter 16a followed by the second diverter 16b and are generally uniform after contacting and passing beyond the third diverter 16c. As stated above, conveyor belt 14 travels at velocity $V_B$ along path 26. The acceleration conveyor system 44 has an acceleration conveyor belt 46 which travels at a velocity $V_A > V_B$ thereby allowing pieces 32 to be separated further. In the preferred embodiment $V_A$ is about 1,35 times greater than $V_B$. Therefore, as pieces 32 pass beyond diverter ends 42, they will be traveling at $V_B$. However, as soon as they make contact with acceleration conveyor belt 46, they will be traveling at the new velocity $V_A = 1,35\ V_B$. Therefore, when piece 32b contacts acceleration conveyor belt 46, it will be traveling at $1,35\ V_B$ whereas piece 32c will only be traveling at $V_B$. The difference in velocity causes pieces 32 to separate. As shown in Fig. 6, the discharge end 36 of the diverter system 10 is slightly above acceleration conveyor belt 46.

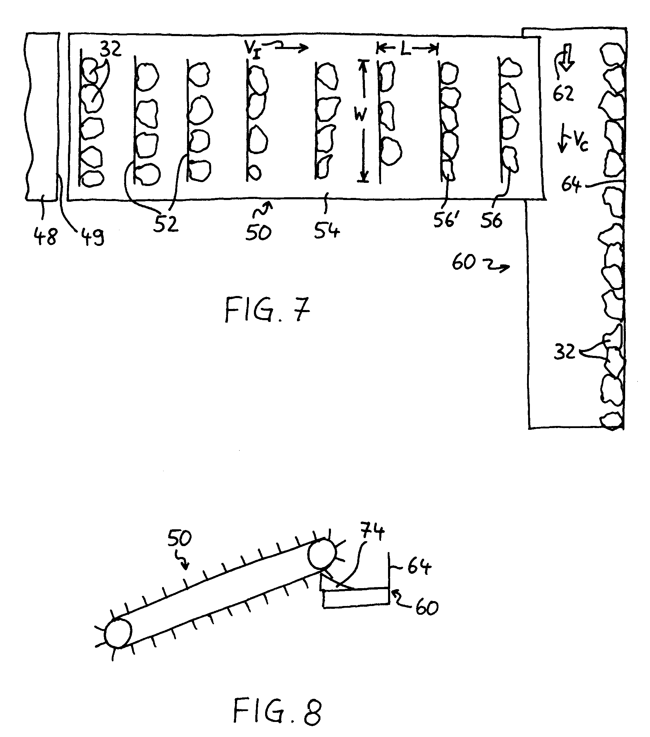

Prior to being placed on the conveyor 12, the pieces of material 32 must be fed to the diverter system 10. As shown in Fig. 7, the pieces of material 32 are filled into a bin or hopper 48 having an opening 49 for expelling the pieces 32 onto a cleated conveyor system 50. In the cleated conveyor system 50 the pieces of material 32 are conveyed along cleats 52 on a cleat conveyor 54. At the end of the cleated conveyor system 50 a cross conveyor system 60 is aligned substantially perpendicular to the path of the cleat conveyor system 50 such that pulses or waves 56 of pieces of material 32 are provided along cross conveyor path 62. Pieces 32 placed on the cross conveyor system 60 travel at such a speed that each pulse 56 is transported down the cross conveyor path 62 before the subsequent pulse 56' is deposited onto the cross conveyor system 60. If the speed of cleated conveyor system 50 is designated by $V_I$, the length between cleats 52 is designated by L, and the width of cleats 52 is designated by W, then the required cross conveyor velocity $V_C$ is given by $V_C = V_I \cdot W/L$ such that each pulse 56 of pieces of material 32 will fall in just behind the prior pulse.

As shown in Fig. 8 a slide 74 is provided between the inclined cleat conveyor system 50 and the cross conveyor system 60. This provides that pulses 56 will be deposited against a far wall 64 of the cross conveyor system 60. This will also assist in dislodging pieces 32 placed on top of each other in order to orient materials 32 in a straight line.

The cleated conveyor system 50 and the cross conveyor system 60 serve to feed the pieces 32 to the receiving end 34 of the diverter system 10. There are substantially no gaps between the pieces of material 32 as they leave cross conveyor system 60 and materials 32 are somewhat aligned along far wall 64 of cross conveyor system 60. The diverter system 10 closes remaining gaps between pieces 32 by affecting the average speed of pieces 32 parallel to the path 26.

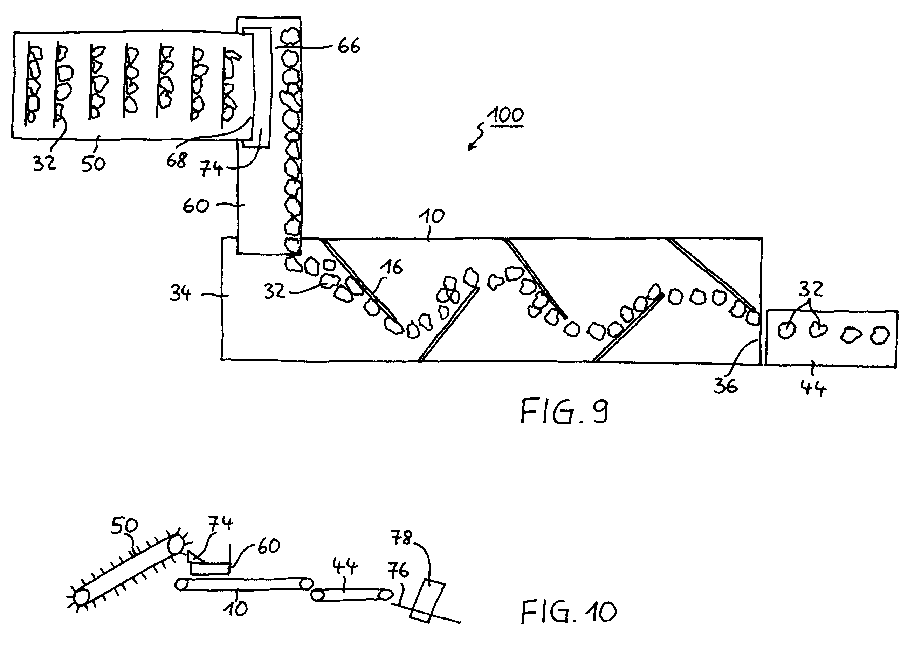

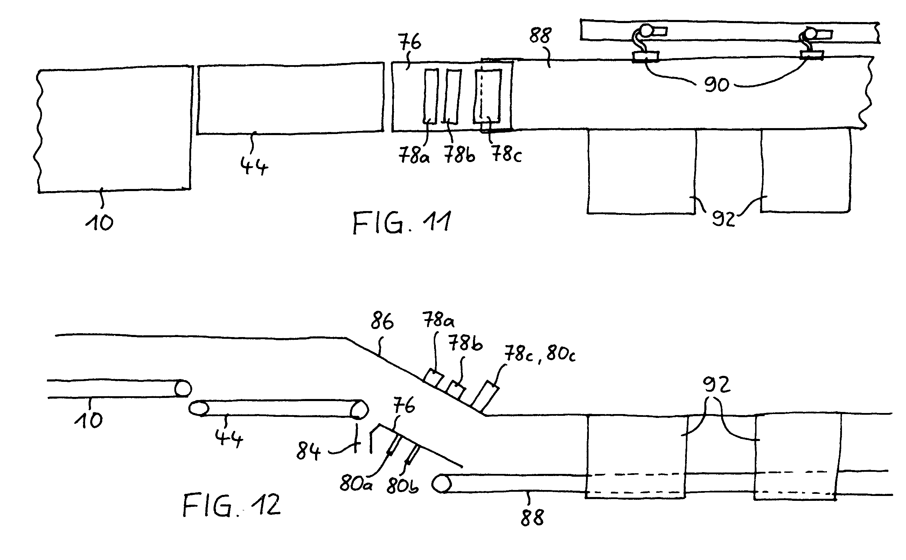

Referring now to Figs. 9, 10, 11 and 12, there is shown a preferred embodiment of the system 100 for singulating inhomogeneous pieces of material according to the present invention. The pieces of material 32 are placed in the bin 48 having opening 49 for expelling pieces 32. The pieces 32 are then fed onto cleated conveyor system 50 which is, in the preferred embodiment, inclined. Proximate to the output end 68 of the cleat conveyor system 50 there is placed slide 74 which delivers pieces to the cross conveyor system 60 proximate to input end 66. The cross conveyor system 60 then transports the pieces 32 to the receiving end 34 of the diverter system 10. As the pieces 32 pass through diverter 16, singulation occurs. The pieces 32 then exit the diverter system 10 at discharge end 36 onto the acceleration conveyor system 44 which tends to space pieces 32. As shown in Figs. 10, 11 and 12 the pieces 32 are then fed onto a sensor conveyor or slide 76 through a sensor unit 78. In the preferred embodiment, the sensor unit 78 comprises plural sensors 78a, 78b, 78c projecting some type of energy like electromagnetic radiation to or through pieces 32. The sensors 78a, 78b, 78c have corresponding receivers 80a, 80b, 80c to receive and analyze the energy transmitted through the pieces of material 32. If a reflector sensor is used, the corresponding receiver 80c is placed on the sensor platform 86. The preferred gap for passing pieces 32 through sensors 78 is about 10 cm. A wear cover is placed over receivers 80 to reduce wear and tear. Just prior to the sensor conveyor or slide 76 there is placed a dirt chute 84 to prevent dirt from interfering with receivers 80a, 80b, 80c. The preferred angle of slide 76 is 15° to 25°. Information from receivers 80 is transmitted through a computer which classifies the type of material. As the pieces of material 32 are fed onto a separation conveyor 88, air nozzles 90 cooperating with receivers 80 eject pieces 32 onto desired ejections chutes 92 for recycling.

## Claims

1. A system for singulating pieces of material (32) having different sizes and shapes, said system comprising: a conveyor (12) for transporting said pieces (32) along a diverter path (26) from a receiving end (34) to a discharge end (36), a first diverter (16a) extending from the left side (20) of the conveyor (12) beyond the middle of the path (26) and intersecting said path (26) at an obtuse angle, a second diverter (16b) extending from the right side (18) of the conveyor (12) beyond the middle of the path (26) and intersecting said path (26) at an obtuse angle, said diverters (16a, 16b) being spaced along said diverter path (26), and an acceleration conveyor (44) receiving the pieces (32) from the discharge end (36) of the conveyor (12) wherein the velocity ($V_A$) of said accelaration conveyor (44) is greater than the velocity ($V_B$) of the conveyor (12).

**2.** The system according to claim 1 wherein the conveyor (12) and/or the acceleration conveyor (44) comprise a conveyor belt (14, 46).

**3.** The system according to claims 1 or 2 wherein said acceleration conveyor (44) is aligned with said conveyor (12).

**4.** The system according to one of the preceding claims comprising further diverters (16c, 16d) arranged in sequence and not overlapping in the direction perpendicular to said diverter path (26).

**5.** The system according to one of the preceding claims further comprising a cross conveyor (60) for delivering the pieces (32) to the receiving end (34) of the conveyor (12) and a cleat conveyor (54) having plural cleats (56) for transporting the pieces (32) to the cross conveyor (12) wherein the cross conveyor (60) is aligned substantially perpendicular to the path of the cleat conveyor (54).

**6.** The system according to claim 5 wherein the velocity of the cross conveyor (60) is substantially given by $V_C = V_l \cdot W/L$ wherein $V_l$ designates the velocity of the cleat conveyor (54) and wherein W designates the width and L the distance of the cleats (56).

**7.** The system according to one of the preceding claims further comprising a sensor unit (78) for determining the pieces (32) delivered by the acceleration conveyor (44) and a separation system (88, 90, 92) communicating with said sensor unit (78) to separate said pieces of material (32) by type.

**8.** A method for singulating pieces of material (32) having different sizes and shapes comprising the steps of: transporting said pieces (32) along a diverter path (26) on a conveyor (12), diverting the pieces (32) by means of diverters (16) sequentially arranged on both sides (18, 20) of the conveyor (12) at angles obtuse to said diverter path (26), and accelerating said diverted pieces (32) on a acceleration conveyor (44).

**9.** The method according to claim 8 further comprising the steps of depositing the pieces (32) on a cleat conveyor (54), delivering the pieces (32) from said cleat conveyor (54) to a cross conveyor (60) and providing the pieces (32) from the cross conveyor (60) to the conveyor (12).

**10.** The method according to claims 8 or 9 further comprising the steps of sensing the accelerated pieces (32) and separating them by type.

FIG. 1

FIG. 2

FIG. 3

FIG. 4

FIG.5

FIG.6

FIG. 7

FIG. 8

FIG. 9

FIG. 10

EP 0 648 695 A2

FIG. 11

76    88    90

78a  78b  78c    92

10    44

FIG. 12

86    78a    78b    78c, 80c

92

76

84    80a  80b

10    44

88